# EUROPÄISCHE PATENTSCHRIFT

(11) **EP 1 996 427 B1**
(45) Veröffentlichungstag und Bekanntmachung des Hinweises auf die Patenterteilung: **08.06.2011**
(21) Anmeldenummer: 07711851.1
(22) Anmeldetag: 08.03.2007
(51) Int. Cl.: B60L 1/00, B61C 17/00, B60L 3/12

(54) **VORRICHTUNG ZUR AUFNAHME UND ÜBERTRAGUNG VON ELEKTRISCHER ENERGIE FÜR SCHIENENFAHRZEUGE**
DEVICE FOR RECORDING AND TRANSMITTING ELECTRICAL ENERGY FOR RAIL VEHICLES
DISPOSITIF DE RÉCEPTION ET DE TRANSMISSION D'ÉNERGIE ÉLECTRIQUE POUR VÉHICULES SUR RAILS

(30) Priorität: 13.03.2006 DE 102006011827; 31.03.2006 DE 102006015085
(43) Veröffentlichungstag der Anmeldung: 03.12.2008
(73) Patentinhaber: KNORR-BREMSE Systeme für Schienenfahrzeuge GmbH, 80809 München (DE)
(72) Erfinder: STERNARDI, Lorenzo, 20154 Mailand (IT); ARDEMAGNI, Pier, Enrico, 26900 Lodi (IT); WIDL, Wolfgang, 2352 Gumpoldskirchen (AT); SCHMIDT-ECKERT, Sebastian, 81545 München (DE); FRIESEN, Ulf, 85579 Neubiberg (DE); AURICH, Stefan, 86316 Friedberg (DE)
(74) Vertreter: Mattusch, Gundula
(86) Internationale Anmeldenummer: PCT/EP2007/001992
(87) Internationale Veröffentlichungsnummer: WO 2007/104464

(56) Entgegenhaltungen:
- CAND. WIRTSCH.-ING. MICHAEL FRENSCH: "Ermittlung von wirtschaftlich und betrieblich optimalen Fahrzeugkonzepten für den Einsatz im Regionalverkehr" [Online] 2005, FACHGEBIET BAHNSYSTEME UND BAHNTECHNIK DER TECHNISCHEN UNIVERSITÄT DARMSTADT , DARMSTADT 7 , XP002452113 ISSN: 1614-9300 Gefunden im Internet: URL:http://www.tu-darmstadt.de/verkehr/bs/ publik/schrift/SR_B7.pdf> [gefunden am 2007-09-20] Seite 14, Absatz 2
- TREIGE P ET AL: "Energiemessung auf elektischen Triebfahrzeugen bei der Deutschen Bahn./On-board energy measurment at electric motor vehicles of Deutsche Bahn./" ELEKTRISCHE BAHNEN, OLDENBOURG INDUSTRIEVERLAG, MUNCHEN, DE, Bd. 98, Nr. 8, August 2000 (2000-08), Seiten 300-305, XP008083735 ISSN: 0013-5437

## Beschreibung

### Stand der Technik

Die Erfindung geht aus von einer Vorrichtung zur Aufnahme und Übertragung von elektrischer Energie von einem Stromabnehmer zu wenigstens einem im Inneren eines Triebschienenfahrzeugs oder Triebschienenfahrzeugzuges angeordneten Energiewandler wie einem elektrischen Fahrmotor, einem Transformator, einem elektrischen Drucklufterzeuger, einer elektrischen Klimaanlage oder ähnl., welche als Elemente wenigstens einen Spannungswandler, einen Hauptschalter, eine Hauptschaltersteuerung, einen Energiezähler und einen Stromwandler beinhaltet, gemäß dem Oberbegriff von Anspruch 1.

Für die Stromversorgung elektrischer Triebfahrzeuge und Triebfahrzeugzüge mit Gleichstrom oder Wechselstrom ist ein zweipoliger Anschluss notwendig. Die isolierte, gegen Erde unter Spannung stehende Fahrleitung bildet den einen Anschlusspol, die nicht isolierten Fahrschienen den anderen Anschlusspol. In der Regel wird die Fahrleitung als eine oberhalb der Gleise aufgehängte Oberleitung ausgebildet. Bei vielen Bahnen des Nahverkehrs wird die Fahrleitung aus Platzgründen nicht als Oberleitung sondern als eine neben den Gleisen angeordnete Stromschienenleitung gebaut. Der Stromabnehmer stellt dann die elektrische Verbindung von der bestrichenen Oberleitung zum Triebfahrzeug her. Die Stromrückleitung zu den Schienen erfolgt über die Räder des Triebfahrzeugs.

Zur Aufnahme, Übertragung und Bereitstellung der elektrischen Energie für die im Inneren angeordneten elektrischen Energiewandler wie Stromrichter und Fahrmotor besitzen elektrisch betriebene Schienenfahrzeuge verschiedene elektrische und elektromechanische Elemente. Diese Elemente stellen folgende Funktionen sicher:
- Kontakt zur Oberleitung oder Stromschiene, beispielsweise durch Pantographen, Stromabnehmer, Schleifer mit zugehörigen Steuereinrichtungen, wie z.B. Ventile, Hilfskompressoreinheiten, elektromechanische Betätigungen,
- Trennen und Schalten der elektrischen Energie, beispielsweise durch Spannungs- Frei- und Umschalter, Hauptschalter, Erdungstrenner mit zugehörigen Steuer- und Betätigungseinrichtungen,
- Schutz vor Überspannung, beispielsweise durch Überspannungsableiter,
- Durch- und Weiterleitung der elektrischen Energie mit zugehöriger Isolation, beispielsweise durch Leitungen, Dachdurchführungen, Isolatoren,
- Wandelung und Messen von Spannung, Strom und elektrischer Energie, evtl. auch von Temperatur und Magnetfeldern, beispielsweise durch Spannungswandler, Stromwandler und Energiezähler.

Die genannten Elemente werden derzeit für jedes Schienenfahrzeug einzeln bezogen und projektspezifisch zusammen verschaltet. Dazu werden die Elemente zur Verbindung der Energiewandler des Schienenfahrzeugs mit der Fahrleitung durch Einzelmontage und Verschaltung auf dem Dach oder anderen geeigneten Bauräumen montiert. Der Aufwand dafür ist entsprechend groß.

Der vorliegenden Erfindung liegt demgegenüber die Aufgabe zugrunde, eine Vorrichtung der eingangs erwähnten Art derart weiter zu entwickeln, dass sie günstiger zu fertigen, einfacher zu montieren ist und eine höhere Betriebssicherheit aufweist.

Diese Aufgabe wird erfindungsgemäß durch die Merkmale von Anspruch 1 gelöst.

### Vorteile der Erfindung

Die Erfindung beruht auf dem Gedanken, dass die Funktionen des Hauptschalters mit der zugehörigen Hauptschaltersteuereinrichtung zusammen mit der Strom- und Spannungsmessung und einem Energiezähler in einem Modul oder in einer Baueinheit integriert sind.

Dazu sind der Spannungswandler, der Hauptschalter, die Hauptschaltersteuerung, der Energiezähler und der Stromwandler durch Integration in einem gemeinsamen Gehäuse, durch Aneinanderflanschen oder durch Integration wenigstens einiger dieser Elemente in einem gemeinsamen Gehäuse und Anflanschen der restlichen Elemente an dem gemeinsamen Gehäuse gegebenenfalls zusammen mit einem Dachteil zu einer vorfertigbaren Baueinheit oder zu einem vorfertigbaren Modul zusammengefasst.

Die genannten Elemente kommen bei vielen Typen von Triebfahrzeugen im wesentlichen in gleicher Bauform und Baugröße vor, so dass aus ihrer Zusammenfassung ein standardisiertes, universell einsetzbares Modul hervorgeht.

Um die Anzahl der Komponenten eines Schienenfahrzeuges zur Verbindung der Energiewandler mit der Fahrleitung zu reduzieren, sind folglich gemäß der Erfindung zahlreiche Funktionen in eine Baueinheit integriert. Hieraus ergeben sich unter anderem die folgenden Vorteile :
- Ein geringerer Projektierungsaufwand durch Reduzierung der Komponenten und Schnittstellen auf eine Baueinheit oder ein Modul,
- Eine einfachere Montage am Triebfahrzeug, da lediglich ein vorgefertigtes Modul montiert, statt mehrere Komponenten miteinander verschaltet werden müssen,
- Die Standardisierbarkeit der Baueinheit mit standardisierten Schnittstellen für mehrere Typen von Triebfahrzeugen,
- Die Kombinationsmöglichkeit von mehreren Baueinheiten für Mehrsystemanwendungen,
- Die Vorprüfbarkeit der Baueinheit oder des Moduls im Werk anstatt einer Prüfung der einzelnen Elemente nach der Montage am Kasten, insbesondere auf dem Dach des Triebfahrzeugs.

Nicht zuletzt liegt die Verantwortung für die Funktionstüchtigkeit und Zuverlässigkeit der Baueinheit bei dem diese fertigenden Hersteller, anstatt wie bisher bei mehreren Zulieferern, was seitens des Triebfahrzeugherstellers die Abwicklung von Schadensfällen vereinfacht. Insgesamt ergibt sich ein hohes Kosteneinsparungspotential.

Ein wesentlicher Vorteil besteht auch darin, dass einerseits der Stromwandler, durch welchen die Strommessung stattfindet und andererseits der Hauptschalter, welcher im Kurzschlussfall, bei welchem seine Schutzfunktion gebraucht wird, durch die Strommessung gesteuert wird, in ein- und demselben Modul untergebracht sind. Aufgrund der somit vormontierten und "internen" Verschaltung von Hauptschalter und Stromwandler kann die funktionelle Kompatibilität der beiden Elemente bereits vor der Montage des Moduls am Triebfahrzeug und im Betrieb sichergestellt und diagnostiziert werden, was die Ausfallsicherheit dieser sicherheitsrelevanten Elemente vorteilhaft erhöht.

Nicht zuletzt kann innerhalb des Moduls oder der Baueinheit eine Plausibilitätskontrolle der Eingangs- und/oder Ausgangsgrößen der einzelnen Elemente stattfinden, beispielsweise innerhalb einer Diagnoseroutine, welche beispielsweise von einem in das das Modul integrierten Steuergerät durchgeführt wird. Eine solche Plausibilitätskontrolle betrifft insbesondere die sicherheitsrelevante Strom- und Spannungsmessung innerhalb des Moduls. Durch die genannten Maßnahmen wird daher die Funktions- und Ausfallsicherheit der Vorrichtung erhöht.

Das erfindungsgemäße Modul lässt sich bei allen Triebfahrzeuggattungen von Schienenfahrzeugen einsetzen, insbesondere für Triebzüge im Fernverkehr und Regionalverkehr, Lokomotiven, wobei diese von einer Wechsel- oder Gleichspannung gespeist werden können, bevorzugt von einer Wechselspannung.

Genaueres geht aus der folgenden Beschreibung von Ausführungsbeispielen hervor.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: ein Schaltbild einer Vorrichtung zur Aufnahme und Übertragung von elektrischer Energie von einer Fahrleitung zu wenigstens einem im Inneren eines Triebschienenfahrzeugs oder Triebschienenfahrzeug- zuges angeordneten Energiewandler gemäß einer bevorzugten Aus- führungsform der Erfindung,
- Fig.2: eine schematische Darstellung einer weiteren Ausführungsform der erfindungsgemäßen Vorrichtung.

### Beschreibung der Ausführungsbeispiele

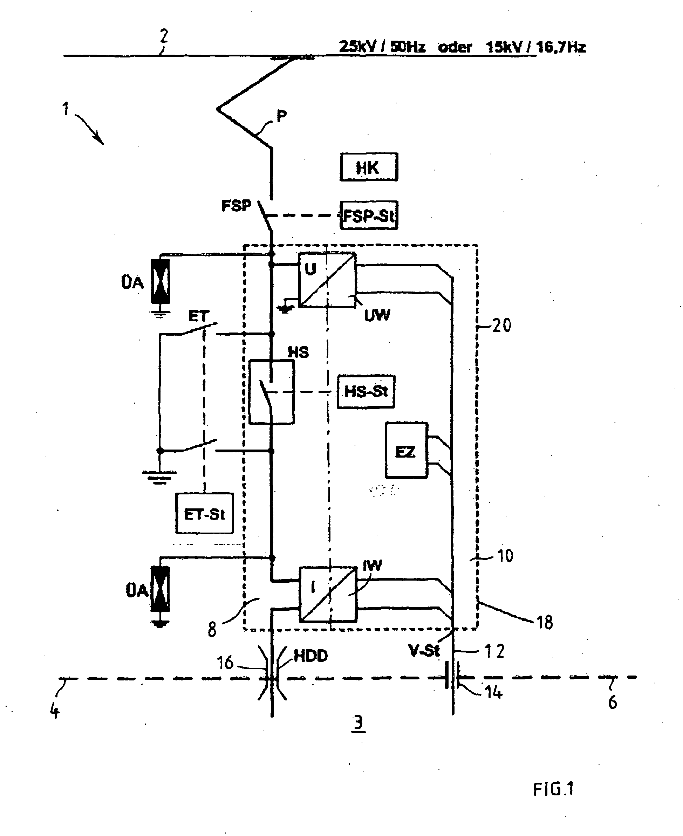

Die in Fig.1 als Schaltbild gezeigte Vorrichtung 1 dient zur Aufnahme und Übertragung von elektrischer Energie von einem mit einer Fahrleitung 2 in Kontakt stehenden Stromabnehmer P zu wenigstens einem im Inneren 3 eines Kastens 4 eines Triebschienenfahrzeugs oder Triebschienenfahrzeugzuges angeordneten nicht gezeigten Energiewandler. Bei dem Triebfahrzeug handelt es sich vorzugsweise um ein mit Wechselstrom betriebenes Triebfahrzeug, welchem über die hier als Oberleitung 2 ausgebildete Fahrleitung eine Spannung von 25kV bei 50 Hz oder 15kV bei 16,7 Hz zugeführt wird. Die Vorrichtung 1 ist am Kasten 4 des Triebfahrzeugs, bevorzugt auf dessen Dach 6 befestigt.

In Richtung des Stromflusses von der Fahrleitung 2 ins Innere 3 des Kastens 4 des Triebfahrzeugs gesehen beinhaltet die Vorrichtung 1 einen Stromabnehmer oder Pantographen P, der aus folgenden Grundbaugruppen besteht: Einem Rahmen, einer Schere, einer Wippe und einem Antrieb. Aus Maßstabsgründen ist der Pantograph P in den Figuren vereinfacht dargestellt, deshalb sind diese Bauelemente dort nicht einzeln gezeigt. Der Rahmen bildet die Tragstruktur des Pantographen P, der mittels Isolatoren in der Regel auf dem Dach 6 des Triebfahrzeugs befestigt wird. Die gesamte Struktur befindet sich im angehobenen Zustand unter Spannung. Auf der Wippe befinden sich die Schleifleisten, die entsprechend den nationalen Vorschriften unterschiedliche Breiten, zusätzlich mit Endhömem und entsprechend der Spannungsart auch aus unterschiedlichen Materialien (Kohle, Kupfer, Aluminium, Stahl) aufgebaut sein können. Das Heben und der Anpressdruck des Pantographen P wird im Regelfall mittels Hubfedem im Rahmen realisiert. Das Senken erfolgt über einen Druckluftzylinder, der über entsprechende Magnetventilsteuerungen betätigt wird. Zur Druckluftversorgung des Druckluftzylinders ist eine Hilfskompressoreinrichtung HK vorgesehen, welche durch eine Hilfsenergieversorgung, beispielsweise eine Batterie gespeist wird. Zusätzlich kann in der Wippe eine Schleifleistenüberwachung mit automatischer Senkeinrichtung integriert sein (Detektion des Druckabfalls in einem mit Druckluft versorgten Kanal). Um mit höheren Geschwindigkeiten als die Auslegungsgeschwindigkeit vorhandener Strecken fahren zu können, werden auch aktiv geregelte Pantographen P eingesetzt.

Dem Pantograph P ist in Richtung des Stromflusses ein Freischalter Pantograph FSP nachgeordnet, der eine Ein-Pol-Einrichtung mit pneumatischer Betätigung darstellt, die in der Regel auf dem Dach 6 des Triebfahrzeugs angeordnet ist und in unterschiedlichen Ausführungen vorkommt: Als Unterbrechungsschalter, der die Hochspannungsdachleitung unterbricht und als Unterbrechungs- und Erdungsschalter, der der die Hochspannungsdachleitung unterbricht und erdet. Der Freischalter Pantograph FSP wird durch eine Freischalter Pantograph-Steuerung FSP-St gesteuert.

Nach dem Freischalter Pantograph FSP findet an einem Spannungswandler UW eine Verzweigung in einen Hochspannungsbereich 8 und einen Niederspannungsbereich 10 statt, welche in den Figuren durch eine Strichpunktlinie voneinander getrennt sind. Insbesondere bei mit Wechselstrom betriebenen Triebfahrzeugen wird ein Spannungswandler UW eingesetzt, um die hohe Spannung der Fahrleitung von 25kV bei 50 Hz oder 15kV bei 16,7 Hz auf eine demgegenüber niedrigere Mess- oder Steuerspannung Uₘₑₛₛ zur Weiterverarbeitung durch Energiewandler oder für Messgeräte im Führerstand zu reduzieren. Das im Spannungswandler UW zusätzlich erzeugte Messsignal Uₘₑₛₛ für die Spannung U dient neben der Anzeige der Spannungshöhe als Eingangssignal für Schutzeinrichtungen (Über- und Unterspannungsabschaltung, Verriegelungen usw.). Im weiteren wird die gemessene Spannung Uₘₑₛₛ für den nachgeordneten Energiezähler EZ benötigt.

Im Hochspannungsbereich 8 dient ein dem Spannungswandler UW nachgeschalteter Hauptschalter HS zum Schalten der Energiezufuhr des Triebfahrzeugs unter Belastung oder beim Ansprechen von Schutz- und Sicherungseinrichtungen. Er trennt die gesamte elektrische Anlage in Fehlerfällen vom Netz, wie z.B. bei Kurzschlüssen oder bei Auf- und Abrüstung des Fahrzeugs, und allen anderen Fällen, in denen die Anlage vom Netz getrennt werden muss. Als einpoliger, ölloser und elektrisch ferngesteuerter Hochspannungsleistungsschalter muss er in der Lage sein, den Transformator des Triebfahrzeugs unter Spannung zu setzen und ihn unter voller Belastung auszuschalten. Im Falle der hier betrachteten Wechselstromspeisung des Triebfahrzeugs wird er durch einen druckluftbetätigten Hochspannungsschnellschalter oder durch eine Vakuumschaltröhre gebildet, welche im Defektfall den Kurzschlussstrom möglichst bereits nach dem ersten Nulldurchgang unterbrechen können muss. Der Hauptschalter HS wird durch eine Hauptschalter Steuerung HS-St gesteuert, die im Niederspannungsbereich 10 angeordnet ist.

Dem Hauptschalter HS parallel geschaltet ist ein Erdungstrenner ET, welcher eine gleichzeitige Erdung sowohl des an seiner einen Seite angeschlossenen elektrischen Kreises als auch des an seiner anderen Seite angeschlossenen elektrischen Kreises ermöglicht. Er ist hier beispielsweise als doppelpolige Einrichtung ausgeführt und seine Betätigung ist mechanisch über einen Verriegelungshebel mit anderen Sicherheitseinrichtungen gekoppelt. Der Erdungstrenner ET wird durch eine Erdungstrenner-Steuerung ET-ST betätigt.

Im Niederspannungsbereich 10 ist dem Spannungswandler UW ein geeichter und zertifizierter Energiezähler EZ nachgeschaltet, welcher anhand der vom Spannungswandler UW gemessenen Spannung und des von einem Stromwandler IW gemessenen Stromes die verbrauchte elektrische Energie ermittelt. Er wird insbesondere zu Verrechnungszwecken eingesetzt, was insbesondere für den Fall von Bedeutung ist, in welchem die Bahnstrecke und der Fahrzeugbetreiber unterschiedlichen Unternehmen zugeordnet sind.

Der Energiezähler EZ ist derart ausgebildet, dass an seinen Schnittstellen alle gängigen Strom- und Spannungswandler/-transformatoren angeschlossen werden können. Weiterhin können AC- und DC- Messwandler gleichzeitig angeschlossen werden (Mehrsystemfähigkeit). Die Werte für die aufgenommene und rückgespeiste Energie werden in einem Lastspeicher gespeichert, zusammen mit Uhrzeit und Ereignissen wie Netzwechsel, Zugnummern usw.. Optional kann ein Modem zum Datentransfer eingesetzt werden.

Die Oberstrommessung erfolgt durch den Stromwandler IW, welcher zwischen den Hochspannungsbereich 8 und den Niederspannungsbereich 10 geschaltet ist. Er dient zur Messung des von der Oberleitung 2 her geführten Stromflusses. Das gemessene Signal dient zum einen zur Überwachung vor Über- und Kurzschlussströmen, welche den Hauptschalter HS auslösen können. Zum anderen wird die Strommessung für den Energiezähler EZ benötigt. Für das Messen von Gleich- und Wechselströmen werden unterschiedliche Messprinzipien angewendet, so dass hierfür unterschiedliche Wandlertypen notwendig sind.

Mittels einer Schnittstelle V-St für Steuersignale steht der Niederspannungsbereich 10 mit im Inneren 3 des Triebfahrzeugs angeordneten Steuergeräten und/oder anderen elektrischen Einrichtungen in Verbindung, indem eine entsprechende Verkabelung 12 durch einen Dachdurchlass 14 geführt wird. Die Schnittstelle V-St wird vorzugsweise durch eine Steckerverbindung gebildet.

Weiterhin sorgt eine die Hochspannungsdachdurchführung HDD, beispielsweise in Form einer isolierten Durchgangsöffnung 16 im Dach 6 des Triebfahrzeugs dafür, dass der Hochspannungsbereich 8 mit den Energiewandlern im Inneren 3 des Kastens 4 in elektrischer Verbindung stehen kann.

Die Freischalter Pantograph-Steuerung FSP-St, die Hauptschalter-Steuerung HS-St und die Erdungstrenner-Steuerung ET-St können elektro-mechanisch, pneumatisch oder hydraulisch betätigt sein.

Der Spannungswandler UW, der Hauptschalter HS, die Hauptschaltersteuerung HS-St, der Energiezähler EZ und der Stromwandler IW sind zu einer vorfertigbaren Baueinheit oder zu einem vorfertigbaren Modul 18 zusammengefasst.

Diese Zusammenfassung erfolgt durch die räumlich nahe Anordnung der oben genannten Elemente in dem Modul 18 oder in der Baueinheit. Hierzu können die einzelnen Elemente
- durch Aneinanderflanschen ihrer Gehäuse,
- durch Integration in einem gemeinsamen Gehäuse,
- durch Integration wenigstens einiger Elemente in einem gemeinsamen Gehäuse und Anflanschen der restlichen Elemente an dem gemeinsamen Gehäuse
zu der Baueinheit oder zu dem Modul zusammengefasst sein. Vorzugsweise sind die genannten Elemente gemäß der Ausführungsform von Fig.1 allesamt in einem gemeinsamen Gehäuse 20 untergebracht, dessen Umrisse in Fig.1 durch eine gestrichelte Linie symbolisiert ist.

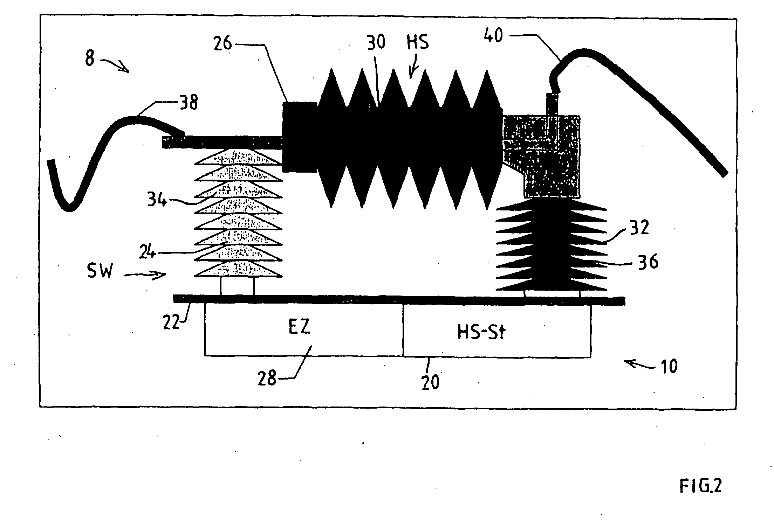

Bei dem Ausführungsbeispiel nach Fig.2 sind die gegenüber dem vorhergehenden Beispiel gleich bleibenden und gleichen wirkenden Teile durch die gleichen Bezugszeichen gekennzeichnet.

Bei der Ausführungsform von Fig.2 ist ein Dachteil 22 des Triebfahrzeugs in das Modul 18 integriert und trennt insbesondere den vom Dachteil 22 nach oben oder außen weg ragenden Hochspannungsbereich 8 beinhaltend den Hauptschalter HS, einen Sensor 24 für die Spannungsmessung und einen Sensor 26 für die Strommessung vom von dem Dachteil 22 unten getragenen, ins Innere 3 des Triebfahrzeugs ragenden Niederspannungsbereich 10 beinhaltend Auswerteeinrichtungen 28 der von den Sensoren 24, 26 für die Spannungs- und Strommessung gelieferten Signale im Rahmen des Energiezählers EZ sowie die Hauptschalter-Steuerung HS-St. Die genannten Elemente 28, EZ und HS-St sind vorzugsweise in einem vom Dachteil 22 getragenen Gehäuse 20 untergebracht. Das Dachteil 22 ist auf eine entsprechende Dachöffnung im Treibfahrzeug lösbar auf- oder in diese einsetzbar, beispielsweise so, dass die hier nicht gezeigte Dachöffnung vom Rand des Dachteils 22 übergriffen wird.

Bei dieser Ausführungsform wird der Hauptschalter HS durch eine Vakuumschaltröhre 30 gebildet. Diese Vakuumschaltröhre 30 ist im wesentlichen horizontal angeordnet und wird beidendseitig von zwei als senkrecht vom Dachteil 22 weg ragende Isolatoren 32, 34 ausgebildeten Stützen mit einem derart großen Abstand zum Dachteil 22 gelagert, dass der wegen der Hochspannung erforderliche Sicherheitsabstand zum Dachteil 22 eingehalten wird. In dem einen Isolator 34 ist der Sensor 24 für den Spannungswandler SW zur Spannungsmessung untergebracht, während der andere Isolator 32 eine hier verdeckte Mechanik 36 zur Betätigung der Vakuumschaltröhre 30 aufnimmt, welche durch die Hauptschalter-Steuerung H-St im Gehäuse 20 betätigt wird. Hierzu sind im Dachteil 22 entsprechende Öffnungen vorhanden.

Die Strommessung erfolgt bevorzugt durch den an dem einem Ende der Vakuumschaltröhre 30 angeordneten Sensor 26. Von diesem Ende führt eine Hochspannungsleitung 38 zum Pantographen P, eine weitere Hochspannungsleitung 40 verbindet das andere Ende der Vakuumschaltröhre 30 mit der in Fig. 2 nicht gezeigten Dachdurchführung HDD.

### Bezugszeichenliste

- 1: Vorrichtung
- 2: Fahrleitung
- 3: Inneres
- 4: Kasten
- 6: Dach
- 8: Hochspannungsbereich
- 10: Niederspannungsbereich
- 12: Verkabelung
- 14: Dachdurchlass
- 16: Durchgangsöffnung
- 18: Modul
- 20: Gehäuse
- 22: Dachteil
- 24: Sensor
- 26: Sensor
- 28: Auswerteeinrichtungen
- 30: Vakuumschaltröhre
- 32: Isolator
- 34: Isolator
- 36: Mechanik
- 38: Hochspannungsleitung
- 40: Hochspannungsleitung
- P: Pantograph
- HK: Hilfskompressoreinrichtung
- FSP: Freischalter Pantograph
- FSP-St: Freischalter Pantograph-Steuerung
- UW: Spannungswandler
- HS: Hauptschalter
- HS-St: Hauptschalter-Steuerung
- ET: Erdungstrenner
- ET-St: Erdungstrenner-Steuerung
- EZ: Energiezähler
- IW: Stromwandler
- HDD: Hochspannungsdachdurchführung
- V-St: Schnittstelle für Steuersignale

## Patentansprüche

1. Vorrichtung (1) zur Aufnahme und Übertragung von elektrischer Energie von einem Stromabnehmer (P) zu wenigstens einem im Inneren (3) eines Triebschienenfahrzeugs oder Triebschienenfahrzeugzuges angeordneten Energiewandler wie einem elektrischen Fahrmotor, einem Transformator, einem elektrischen Drucklufterzeuger, einer elektrischen Klimaanlage oder ähnl., welche als Elemente wenigstens einen Spannungswandler (UW), einen Hauptschalter (HS), eine Hauptschaltersteuerung (HS-St), zeine Energiezähler (EZ) und einen Stromwandler (IW) beinhaltet, **dadurch gekennzeichnet, dass** wenigstens der Spannungswandler (UW), der Hauptschalter (HS), die Hauptschaltersteuerung (HS-St), der Energiezähler (EZ) und der Stromwandler (IW) durch Integration in einem gemeinsamen Gehäuse (20), durch Aneinanderflanschen ihrer Gehäuse oder durch Integration wenigstens einiger Elemente (EZ, HS-St) in einem gemeinsamen Gehäuse (20) und Anflanschen der restlichen Elemente an dem gemeinsamen Gehäuse (20) gegebenenfalls zusammen mit einem Dachteil (22) zu einer vorfertigbaren Baueinheit oder zu einem vorfertigbaren Modul (18) zusammengefasst sind.

2. Vorrichtung nach Anspruch 1, **dadurch gekennzeichnet, dass** die Baueinheit oder das Modul (18) vormontiert und auf einem Dach (6) des Triebschienenfahrzeugs oder Triebschienenfahrzeugzuges angeordnet ist.

3. Vorrichtung nach wenigstens einem der vorhergehenden Ansprüche, **dadurch gekennzeichnet, dass** das Modul (18) wenigstens ein separates, am Dach (6) des Triebschienenfahrzeugs oder Triebschienenfahrzeugzuges lösbar befestigbares Dachteil (22) umfasst.

4. Vorrichtung nach Anspruch 3, **dadurch gekennzeichnet, dass** das Dachteil (22) einen nach außen ragenden Hochspannungsbereich (8) und einen in das Innere (3) des Triebschienenfahrzeugs oder Triebschienenfahrzeugzuges ragenden Niederspannungsbereich (10) trägt, wobei der Hochspannungsbereich (8) wenigstens den Hauptschalter (HS, 30), einen Sensor (24) für die Spannungsmessung und einen Sensor (26) für die Strommessung und der Niederspannungsbereich (10) wenigstens eine Auswerteeinrichtung (28) für die von den Sensoren (24, 26) für die Spannungs- und Strommessung gelieferten Signale im Rahmen des Energiezählers EZ sowie die Hauptschaltersteuerung (HS-St) umfasst und wenigstens einige der Elemente (28, HS-St, EZ) des Niederspannungsbereichs (10) in einem gemeinsamen Gehäuse (20) untergebracht sind.

5. Vorrichtung nach Anspruch 4, **dadurch gekennzeichnet, dass** der Hauptschalter (HS) wenigstens eine horizontale Vakuumschaltröhre (30) beinhaltet, welche durch vom Dachteil (22) senkrecht weg ragende Isolatoren (32, 34) getragen wird, welche wenigstens einen Sensor (24) zur Spannungsmessung und eine Mechanik (36) zur Betätigung der Vakuumschaltröhre (30) aufnehmen, welche durch die Hauptschalter-Steuerung H-St betätigt wird.

## Claims

1. Device (1) for receiving and transmission of electrical energy fro a current collector (P) to at least one energy converter arranged on the inside (3) of a traction vehicle or traction vehicle train, such as an electric drive engine, a transformer, an electric air compressor, an electric air-conditioning installation or the like, which comprises as elements at least a voltage converter (UW), a main switch (HS), a main switch control unit (HS-St), an energy meter (EZ) and a current converter (IW), **characterised in that** at least the voltage converter (UW), the main switch (HS), the main switch control unit (HS-St), the energy meter (EZ) and the current converter (IW) are combined by integration in a common housing (20) by joining together their housings or by integrating at least some elements (EZ, HS-St) in a common housing (20) and joining the remaining elements onto the said common housing (20), if necessary together with a roof element (22), to produce an assembly or a module (18) that can be prefabricated.

2. Device according to Claim 1, **characterised in that** the assembly or module (18) is pre-assembled and arranged on a roof (6) of the traction vehicle or traction vehicle train.

3. Device according to at least one of the preceding claims, **characterised in that** the module (18) comprises a roof element (22) which can be releasably fixed onto the roof (6) of the traction vehicle or traction vehicle train.

4. Device according to Claim 3, **characterised in that** the roof element (22) carries an outward-projecting high-voltage zone (8) and a low-voltage zone (10) that projects into the inside of the traction vehicle or traction vehicle train, such that the high-voltage zone (8) comprises at least the main switch (HS, 30), a sensor (24) for voltage measurement and a sensor (26) for current measurement, and the low-voltage zone (10) comprises at least an evaluation unit (28) for the signals delivered by the sensors (24, 26) for the voltage and current measurements in relation to the energy meter (EZ) and the main switch control unit (HS-St), and at least some of the elements (28, HS-St, EZ) in the low-voltage zone (10) are accommodated in a common housing (20).

5. Device according to Claim 4, **characterised in that** the main switch (HS) comprises at least one horizontal vacuum switch tube (30), which is supported by insulators (32, 34) that project vertically away from the roof element (22), which hold at least one sensor (24) for voltage measurement and a mechanism (36) for actuating the vacuum switch tube (30), the said mechanism being actuated by the main switch control unit (HS-St).

## Revendications

1. Dispositif (1) de réception et de transmission d'énergie électrique d'un pantographe à au moins un convertisseur d'énergie disposé à l'intérieur d'un véhicule à moteur sur rail ou d'un train à véhicule à moteur sur rail, comme un moteur de traction électrique, un transformateur, un appareil électrique de production d'air comprimé, une installation électrique de conditionnement d'air ou analogue, dispositif qui comprend comme éléments au moins un convertisseur (UW) de tension, un interrupteur (HS) principal, une commande (HS-St) d'interrupteur principal, un compteur (EZ) d'énergie et un convertisseur (IW) de courant, **caractérisé en ce qu'**au moins le convertisseur (UW) de tension, l'interrupteur (HS) principal, la commande (HS-St) de l'interrupteur principal, le compteur (EZ) d'énergie et le convertisseur (IW) de courant sont, par intégration dans un boîtier (20) commun, rassemblés par bridage l'un sur l'autre de leur boîtier ou par intégration d'au moins quelques éléments (EZ, HS-St) dans un boîtier (20) commun et bridage des éléments restant sur le boîtier (20) commun, le cas échéant avec une partie (22) de toit, en une unité de construction pouvant être préfabriquée ou en un module (18) pouvant être préfabriqué.

2. Dispositif suivant la revendication 1, **caractérisé en ce que** l'unité de construction ou le module est monté à l'avance et est disposé sur un toit (6) du véhicule à moteur sur rail ou du train à véhicule à moteur sur rail.

3. Dispositif suivant au moins l'une des revendications précédentes, **caractérisé en ce que** le module (18) comprend au moins une partie (22) de toit pouvant être fixée d'une manière amovible séparément sur le toit (6) du véhicule à moteur sur rail ou du train à véhicule à moteur sur rail.

4. Dispositif suivant la revendication 3, **caractérisé en ce que** la partie (22) de toit porte une zone (8) de haute tension dépassant vers l'extérieur et une zone (10) de basse tension dépassant à l'intérieur (3) du véhicule à moteur sur rail ou du train à véhicule à moteur sur rail, la zone (8) de haute tension comprenant au moins l'interrupteur (HS, 30) principal, un capteur (24) pour mesurer la tension et un capteur (25) pour mesurer le courant, et la zone (10) de basse tension, au moins un dispositif (28) d'exploitation des signaux fournis par les capteurs (24, 26) pour la mesure de la tension et du courant dans le cadre du compteur EZ d'énergie ainsi de la commande (HS-St) de l'interrupteur principal, et au moins quelques-uns des éléments (28, HS-St, EZ) de la zone (10) de basse tension sont logés dans un boîtier (20) commun.

5. Dispositif suivant la revendication 4 **caractérisé en ce que** l'interrupteur (HS) principal comporte au moins un tube (30) de commutation sous vide, qui est horizontal et qui est porté par des isolateurs (32, 34) s'éloignant verticalement de la partie (22) de toit, isolateurs qui reçoivent au moins un capteur (24) de mesure de la tension et un mécanisme (36) d'actionnement du tube (30) de commutation à vide, lequel est actionné par la commande H-St de l'interrupteur principal.
